# EUROPEAN PATENT SPECIFICATION

(11) **EP 3 619 108 B1**
(45) Date of publication and mention of the grant of the patent: **02.11.2022**
(21) Application number: 18724334.0
(22) Date of filing: 26.04.2018
(51) Int. Cl.: B64C 1/26, B64F 5/10

(54) **AIRCRAFT WING-TO-FUSELAGE INTERFACE PERMITTING POSITIONAL ADJUSTMENT**
FLÜGEL-RUMPF-GRENZFLÄCHE EINES FLUGZEUGS MIT MÖGLICHKEIT ZUR POSITIONSANPASSUNG
INTERFACE AILE-FUSELAGE D'AÉRONEF PERMETTANT UN AJUSTEMENT DE POSITION

(30) Priority: 01.05.2017 US 201762492606 P
(43) Date of publication of application: 11.03.2020
(73) Proprietor: Bombardier Inc., Dorval, Québec H4S 1Y9 (CA); Short Brothers Plc, Belfast, BT3 9DZ (IE)
(72) Inventor: MURPHY, Michael, Whitby, Ontario L1R 1T6 (CA); ARAUJO, Jack, Ajax, Ontario L1S 6N5 (CA); SHUM, Gary, Mississauga, Ontario L5R 3H9 (CA); BRADLEY, George, Montreal, Québec H3T 1M7 (CA)
(74) Representative: HGF
(86) International application number: PCT/IB2018/052910
(87) International publication number: WO 2018/203190

(56) References cited:
- EP-A1- 2 748 062
- WO-A1-2009/068106
- US-A1- 2012 043 422

## Description

### TECHNICAL FIELD

The disclosure relates generally to aircraft, and more particularly to the assembly of aircraft.

### BACKGROUND

Fixed wing aircraft typically comprise two wings that are attached to a fuselage via a central wing box which defines a load path between the wings and the fuselage. The number of parts needed for assembling the wings to the fuselage via the wing box can be relatively high and the associated assembly operations, which take place on the final assembly line, can be time consuming. Some of the operations associated with assembling the wings to the fuselage can require assembly personnel to have to physically access the space inside the wings in order to perform some of the assembly operations from inside the wings. For some aircraft, the space inside of the wings is relatively small and this can limit the number of individuals that can work on assembling the wings to the fuselage at the same time and this can influence the total assembly time.

An example of prior art can be found in US2012043422A1, which describes a method for connecting a wing to a fuselage of an aircraft. A frame for the wing has bays and comprises a front and rear spars, and additional spars located between the front and rear spars. Skin panels are provided on first and second opposing sides of the frame. Openings are provided in the skin panels in locations such that each bay has an opening and such that the openings may alternate between the first side and the second side between adjacent bays in the bays. The frame may be attached to the fuselage using the openings to access an interior of the frame.

### SUMMARY

A structural assembly of an aircraft is provided, as defined in claim 1.

The first interface may be configured to permit a pitch adjustment of the wing unit relative to the fuselage portion when the fuselage portion and the wing unit are attached at the first interface and unattached at the second interface.

The first interface may be configured to permit a yaw adjustment of the wing unit relative to the fuselage portion when the fuselage portion and the wing unit are attached at the first interface and unattached at the second interface.

The first interface may be configured to permit a roll adjustment of the wing unit relative to the fuselage portion when the fuselage portion and the wing unit are attached at the first interface and unattached at the second interface.

The first interface may be disposed at or proximal to an aft portion of the wing unit.

The first interface may define a contact area having a longitudinal dimension along a longitudinal axis of the fuselage portion that is about 1% of a maximum chord length of the wing unit.

The first interface may define a contact area having a longitudinal dimension along a longitudinal axis of the fuselage portion that less than 5% of a maximum chord length of the wing unit.

The first interface may comprise a bolted joint. The bolted joint may be torqued to a value that is less than a final torque value for the bolted joint.

The first interface may comprise a first bolted joint and a second bolted joint. The first bolted joint and the second bolted joint may be disposed on opposite lateral sides of a longitudinal axis of the fuselage portion.

Embodiments may include combinations of the above features.

A method for assembling a wing unit with a fuselage portion of an aircraft is provided, as defined in claim 11.

The relative positional adjustment may comprise a pitch adjustment of the wing unit relative to the fuselage portion.

The relative positional adjustment may comprise a yaw adjustment of the wing unit relative to the fuselage portion.

The relative positional adjustment may comprise a roll adjustment of the wing unit relative to the fuselage portion.

Attaching the fuselage portion and the wing unit at the first structural interface may comprise torqueing a bolted joint of the first structural interface to a value that is less than a final torque value for the bolted joint.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a top plan view of an exemplary aircraft comprising a wing unit as described herein;
FIG. 2 is a perspective view of the wing unit and a fuselage portion of the aircraft of FIG. 1 in the process of being assembled together;
FIG. 3 is a partial perspective view of the wing unit prior to assembly with the fuselage portion;
FIG. 4 is a partial perspective view of a first portion of the wing unit;
FIG. 5A is a partial perspective view of the wing unit showing an interior of the wing unit;
FIG. 5B is an enlarged perspective cross-sectional view of an exemplary seam in an upper wing skin of the wing unit;
FIG. 5C is an enlarged perspective cross-sectional view of an exemplary seam in a lower wing skin of the wing unit;
FIG. 6 is a flowchart illustrating an exemplary method for producing the wing unit;
FIGS. 7A and 7B graphically illustrate an exemplary method for producing an aircraft structural assembly using the fuselage portion and the wing unit;
FIG. 8 is an axial cross-sectional view through the fuselage portion and the wing unit;
FIG. 9 is a perspective view of the axial cross-section through the fuselage portion and the wing unit;
FIG. 10 is perspective view of an aft portion of the wing unit assembled with the fuselage portion;
FIG. 11A is a perspective view showing an exemplary aft tension fitting of the wing unit permitting relative positional adjustment between the wing unit and the fuselage portion;
FIG. 11B is a perspective view showing the aft tension fitting of FIG. 11A in a fully assembled configuration;
FIG. 12A is a perspective view of an exemplary joint between a pressure fence of the wing unit and the fuselage portion;
FIG. 12B is a perspective cross-sectional view taken along line 12-12 of FIG. 12A;
FIG. 13 is a perspective cross-sectional view through another exemplary joint between the pressure fence of the wing unit and the fuselage portion;
FIG. 14 is a perspective view showing an exemplary forward tension fitting of the wing unit for attaching the wing unit to the fuselage portion;
FIG. 15 is a perspective view of an exemplary upper wing skin portion of the wing unit in relation to floor beams of the fuselage portion;
FIG. 16 is a perspective view of an exterior of the pressure fence when the wing unit and the fuselage portion are assembled together; and
FIG. 17 is a flowchart illustrating an exemplary method for assembling the wing unit with the fuselage portion.

### DETAILED DESCRIPTION

Aspects of various embodiments are described through reference to the drawings.

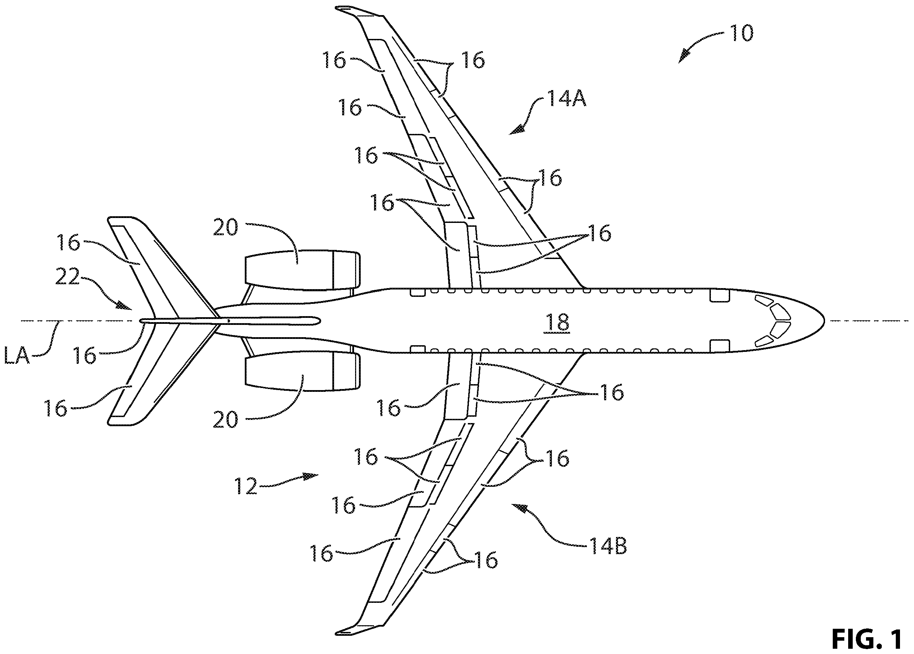

FIG. 1 is a top plan view of an exemplary aircraft 10 which may comprise wing unit 12 and which may be assembled using one or more methods disclosed herein. Aircraft 10 may, for example, be any type of aircraft such as corporate (e.g., business jet), private, commercial and passenger aircraft suitable for civil aviation. For example, aircraft 10 may be a long-range business jet having relatively thin wings 14A, 14B (referred generally as "wings 14") and hence with relatively little space inside wings 14 for access by assembly personnel. Aircraft 10 may be a fixed-wing aircraft.

Aircraft 10 may comprise flight control surfaces 16 (e.g., flaps, slats, ailerons, spoilers, elevator(s), rudder(s)), fuselage 18, one or more engines 20 and empennage 22. One or more of flight control surfaces 16 may be mounted to wings 14. One or more of engines 20 may be mounted to fuselage 18. Alternatively, or in addition, one or more of engines 20 may be mounted to wings 14. Aircraft 10 may have a longitudinal axis LA extending through fuselage 18 from tail to nose in the normal direction of flight, or the direction the pilot faces. Longitudinal axis LA may correspond to a roll axis of aircraft 10.

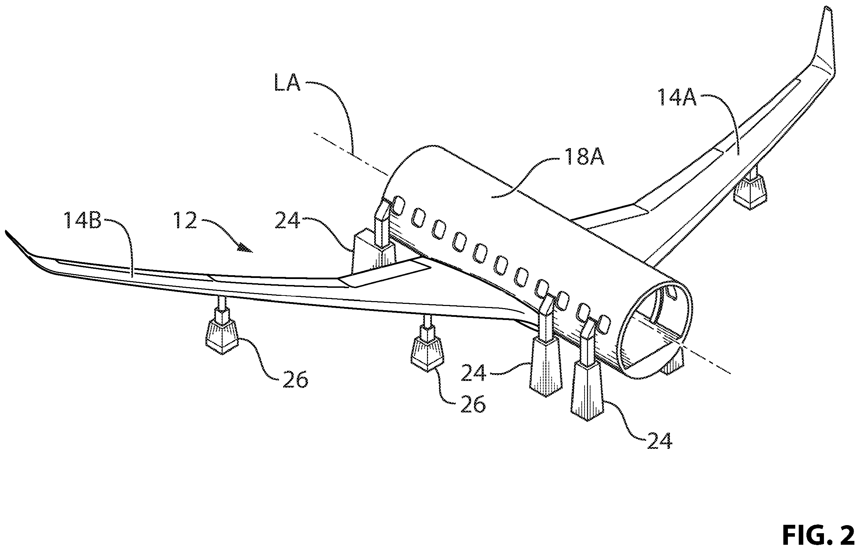

FIG. 2 is a perspective view of wing unit 12 and fuselage portion 18A of aircraft 10 in the process of being assembled together. Fuselage portion 18A may be a mid-fuselage portion of aircraft 10 and may define part of a pressure vessel comprising a passenger cabin of aircraft 10. During assembly, fuselage portion 18A may be supported by fuselage supports 24 and wing unit 12 may be supported by wing supports 26. In some embodiments, wing supports 26 may be controllably actuated so that wing unit 12 may be moved (e.g., raised) relative to fuselage portion 18A in order to bring wing unit 12 and fuselage portion 18A together for assembly. Alternatively or in addition, fuselage supports 24 may be controllably actuated so that fuselage portion 18A may be moved (e.g., lowered) relative to wing unit 12 in order to bring wing unit 12 and fuselage portion 18A together for assembly.

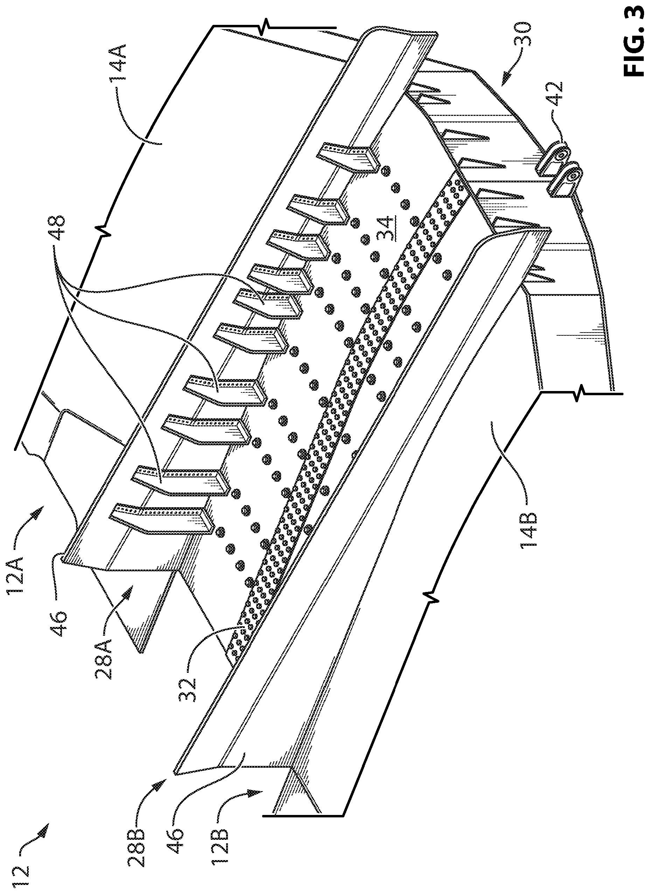

FIG. 3 is a partial perspective view of wing unit 12 prior to assembly with fuselage portion 18A. Wing unit 12 may comprise an assembly of parts that can be assembled separately from fuselage unit 18A and subsequently be assembled as a pre-assembled unit with fuselage portion 18A in order to facilitate assembly of aircraft 10. For the sake of clarity, some details of wing unit 12 including flight control surfaces 16 have been omitted from some figures herein. It is understood that in some embodiments, wing unit 12 may additionally comprise one or more flight control surfaces 16 that may be coupled to or form part of wings 14 before the attachment of wing unit 12 to fuselage portion 18A. Alternatively, one or more flight control surfaces 16 may be attached to wing unit 12 only after wing unit 12 has been attached to fuselage portion 18A.

Wing unit 12 may comprise wing 14A configured to extend in a first lateral direction (e.g., port side) relative to fuselage portion 18A and wing 14B configured to extend in an opposite second lateral direction (e.g., starboard side) relative to fuselage portion 18A. Wings 14A and 14B may define a wingspan of aircraft 10 as shown in FIG. 1. Wings 14A and 14B may be attached together at an intermediate portion 30 of wing unit 12. Intermediate portion 30 of wing unit 12 may define a wing box for interfacing with fuselage portion 18A but that is part of wing unit 12 for assembly with fuselage portion 18A.

Wing unit 12 may comprise pressure fence 28A attached to wing 14A and pressure fence 28B attached to wing 14B. Pressure fence 28A may be disposed at or near a root of wing 14A. Similarly, pressure fence 28B may be disposed at or near a root of wing 14B. Pressure fences 28A, 28B may be configured to interface with fuselage portion 18A and respectively define parts of the pressure vessel partially defined by fuselage portion 18A when wing unit 12 is assembled with fuselage portion 18A.

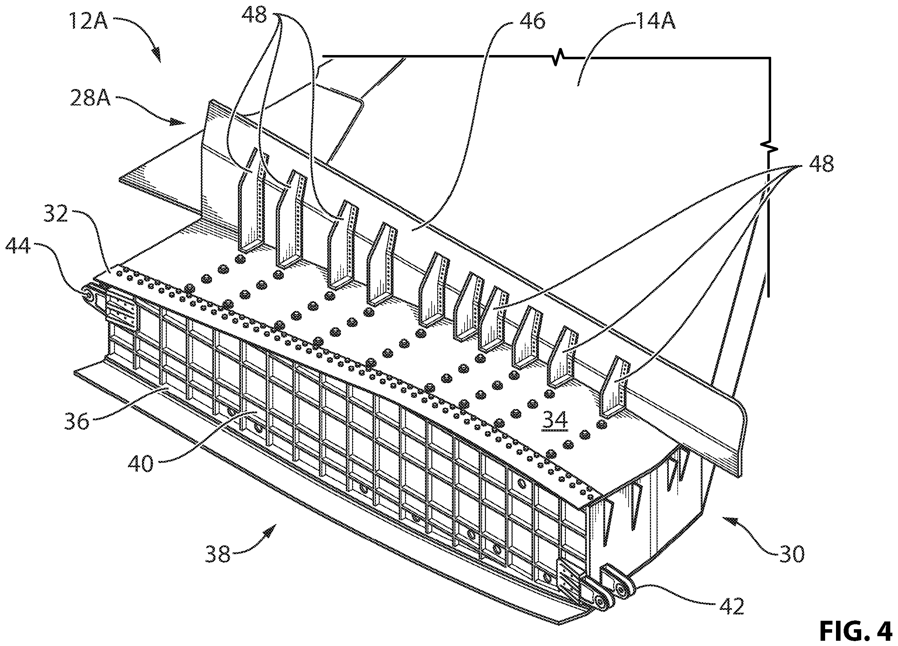

FIG. 4 is a partial perspective view of first portion 12A of the wing unit 12. In some embodiments, wing unit 12 may be manufactured as two portions (e.g., counterparts or halves) that are subsequently assembled together at upper seam 32 formed in upper wing skin portion 34 defined by wings 14 and at lower seam 36 formed in lower wing skin 38 defined by wings 14. For example, first portion 12A and a substantially similar second portion 12B (shown in FIG. 3) may be fabricated at a first facility (e.g., a supplier's facility) and shipped to an aircraft manufacturer's facility where both portions 12A, 12B may then be assembled together to form wing unit 12, and then, wing unit 12 may subsequently be assembled with fuselage portion 18A. First portion 12A and second portion 12B may not necessarily be identical. For example, some components such as middle rib 40, forward keel beam fitting 42 and aft keel beam fitting 44 may be unique within wing unit 12 and accordingly may be disposed on only one or the other of first portion 12A and second portion 12B of wing unit 12. In some embodiments, upper seam 32 in upper wing skin portion 34 may follow a curvature of upper wing skin portion 34 and may lie in a (e.g., vertical) plane that is substantially parallel to longitudinal axis LA. In some embodiments, upper seam 32 may be disposed at a mid-point along a wingspan of wing unit 12. In some embodiments, upper seam 32, lower seam 36 and longitudinal axis LA may lie in a common vertical plane.

In some embodiments, upper wing skin portion 34 may define part of the pressure vessel partially defined by fuselage portion 18A and may comprise relatively few seams so as to provide relatively few potential leak paths. Upper wing skin portion 34 may extend partially or substantially entirely between a forward portion of wing unit and an aft portion of wing unit 12 (e.g., between a front spar and an aft spar of wing unit 12). In some embodiments, upper wing skin portion 34 partially defining the pressure vessel may comprise only one single upper seam 32, which may be a longitudinal seam. For example, the entirety of upper wing skin portion 34 that partially defines the pressure vessel may be free of any transverse seams relative to longitudinal axis LA.

In some embodiments, pressure fences 28A, 28B may be mirror images of each other and may have substantially identical constructions so the following description of pressure fence 28A also applies to pressure fence 28B. However, it is understood that pressure fences 28A and 28B may not necessarily be identical. Pressure fence 28A may comprise fence skin 46 supported by one or more fence frames 48. Fence skins 46 of each pressure fence 28A, 28B may extend upwardly relative to the upper wing skin of respective wings 14A, 14B. In some embodiments, fence skins 46 may also extend in the respective lateral directions of wings 14A, 14B (i.e., laterally away from longitudinal axis LA, in respective outboard directions) and may define a cradle or "V" shape for receiving part of fuselage portion 18A therein during assembly as explained below.

FIG. 4 also illustrates the curvature of upper wing skin portion 34 defined by wings 14. Upper wing skin portion 34 may have a convex curvature relative to wing unit 12. For example part(s) of upper wing skin portion 34 may have a rounded shape that extends outwardly (i.e., generally upwardly) relative to wing unit 12. For example, in some embodiments, at least some of upper wing skin portion 34 may be non-parallel to longitudinal axis LA of fuselage portion 18A.

In embodiments where upper wing skin portion 34 defines part (e.g., a pressure floor) of the pressure vessel defined by fuselage portion 18A, the convex curvature of upper wing skin portion 34 may provide structural advantages including increased stiffness relative to a flat floor of otherwise comparable construction. Accordingly, the (e.g., convex) curvature of upper wing skin portion 34 may result in less structural reinforcement being required compared to a flat floor and hence may result in reduced weight in some embodiments. Also, the use of upper wing skin portion 34 as the pressure floor may, in some embodiments, eliminate the need for fuselage portion 18A to have a separate pressure floor disposed above wing skin portion 34.

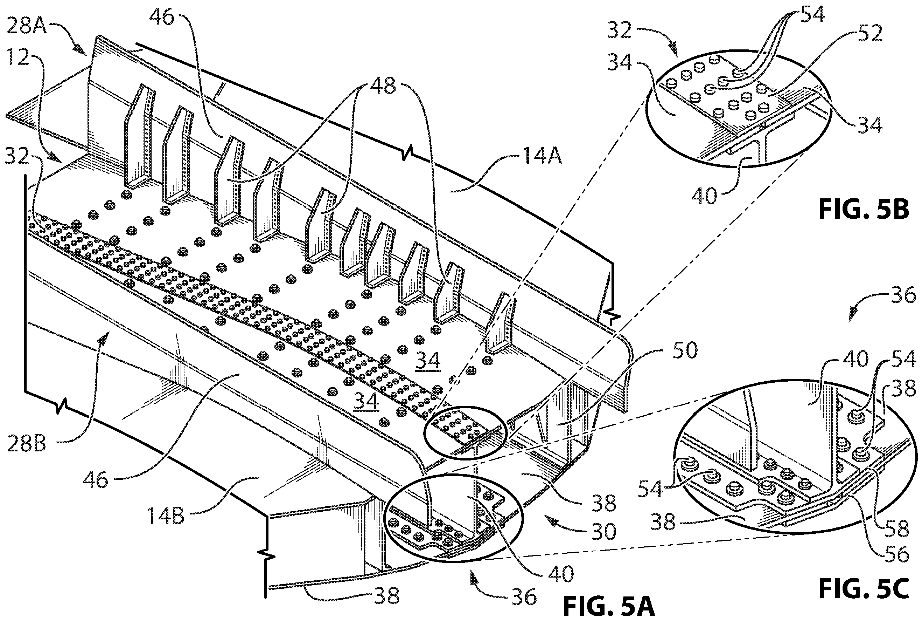

FIG. 5A is a partial perspective view of wing unit 12 where part of a forward spar of wing unit 12 has been omitted to show the interior of part of wing unit 12. Wing unit 12 may comprise root rib 50, which may be disposed at or near a root of wing 14A. Wing 14B may have a substantially identical construction as wing 14A and the description of wing 14A herein may also apply to wing 14B. Root rib 50 may be disposed under or near pressure fence 28A so that pressure fence 28A may be attached to root rib 50 and that root rib 50 may provide some structural support for pressure fence 28A. Upper wing skin portion 34 may be supported by root rib 50 and therefore root rib 50 may at least partially define the curvature of upper wing skin portion 34. Similarly, upper wing skin portion 34 may be supported by a root rib (not shown) of wing 14B and therefore such root rib may also at least partially define the curvature of upper wing skin portion 34. In some embodiments, upper wing skin portion 34 may have a construction that is substantially symmetric relative to longitudinal axis LA. In some embodiments, upper wing skin portion 34 may have a construction that is substantially symmetric relative to a plane in which upper seam 32 and middle rib 40 lie.

Upper wing skin portion 34 may also be supported by middle rib 40 of wing unit 12 and therefore middle rib 40 may at least partially define the curvature of upper wing skin portion 34. In some embodiments, an upper portion of root rib 50 and an upper portion of middle rib 40 may define different curvatures so that upper wing skin portion 34 may have a varying curvature across its span. Alternatively, the upper portion of root rib 50 and the upper portion of middle rib 40 may have parts thereof that are of substantially identical curvatures so that upper wing skin portion 34 may have a constant curvature across its span between middle rib 40 and root rib 50. Even though upper wing skin portion 34 may not be exposed to airflow during flight, it may nevertheless have the same aerodynamic profile as wing 14A (e.g., and as wing 14B) at the root of wing 14A as defined by root rib 50.

FIG. 5B is an enlarged perspective cross-sectional view of upper seam 32 in upper wing skin portion 34 of wing unit 12. FIG. 5C is an enlarged perspective cross-sectional view of lower seam 36 in lower wing skin 38 of wing unit 12. Upper seam 32 and lower seam 36 may define a structural interface between first and second portions 12A, 12B of wing unit 12 and may permit portions 12A, 12B to be manufactured as subunits and subsequently assembled together to form wing unit 12.

In reference to FIG. 5B, upper seam 32 may comprise a splice joint between two panels of upper wing skin portion 34 where upper external strap 52 may overlap both panels of upper wing skin portion 34 and may be secured to both panels by way of suitable fasteners 54 extending through upper external strap 52, through upper wing skin portion 34 and through flanges of middle rib 40. In other words, upper external strap 52 may serve as a splice joining adjacent panels of upper wing skin portion 34 together and to middle rib 40. In some embodiments, where upper wing skin portion 34 also serves as a pressure floor, upper seam 32 may be suitably sealed to withstand the pressurization load of the passenger cabin of fuselage portion 18A. For example, one or more surfaces within upper seam 32 may comprise suitable fay surface sealant to achieve suitable sealing.

In reference to FIG. 5C, lower seam 36 may comprise a splice joint between two panels of lower wing skin 38 where lower external strap 56 and lower internal strap 58 may overlap both panels of lower wing skin 38 and may be secured to both panels by way of suitable fasteners 54 extending through lower external strap 56, through lower internal strap 58, through lower wing skin 38 and through flanges of middle rib 40. In other words, lower external strap 56 and lower internal strap 58 may serve as splices joining adjacent panels of lower wing skin 38 together and to middle rib 40.

Wing unit 12 may be constructed using conventional or other fasteners and other materials suitable for aircraft structures. For example, in various embodiments, wing unit 12 may comprise suitable metallic and/or composite materials. In some embodiments, upper wing skin portion 34, upper external strap 52 and/or other components of wing unit 12 may comprise a suitable aluminum-lithium alloy for example. In some embodiments, upper wing skin portion 34, upper external strap 52 and/or other components of wing unit 12 may comprise a suitable carbon fiber reinforced polymer for example.

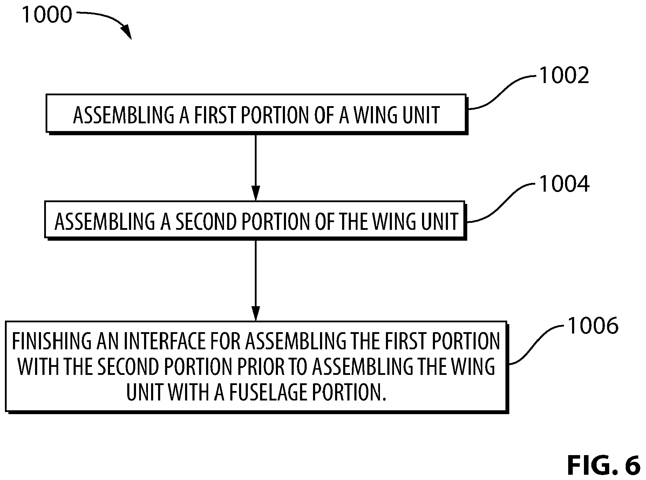

FIG. 6 is a flowchart illustrating a method 1000 for producing wing unit 12 for assembly with fuselage portion 18A of aircraft 10. In various embodiments, method 1000 may comprise assembling first portion 12A of wing unit 12 (see block 1002), assembling second portion 12B of wing unit 12 (see block 1004), and then finishing an interface (e.g., seams 32 and 36) for assembling first portion 12A with second portion 12B prior to assembling wing unit 12 with fuselage portion 18A of aircraft 10 (see block 1006). As explained above, first portion 12A may comprise wing 14A configured to extend in the first lateral direction relative to fuselage portion 18A, and pressure fence 28A configured to define a first part of the pressure vessel partially defined by fuselage portion 18A. Similarly, second portion 12B may comprise wing 14B configured to extend in the second lateral direction relative to fuselage portion 18A, and pressure fence 28B configured to define a second part of the pressure vessel partially defined by fuselage portion 18A.

Method 1000 and the configuration of wing unit 12 may permit first and second portions 12A, 12B to be manufactured at a first facility (e.g., supplier) and then shipped as separate sub-units to a second facility (e.g., aircraft manufacturer). The two portions 12A, 12B of wing unit 12 may then be assembled at the second facility to form wing unit 12. In some embodiments, the interface (e.g., seams 32 and 36) may be at least partially finished at the first facility prior to shipping so that first and second portions 12A, 12B may be readily assembled together upon arrival at the second facility. The finishing of the interface may comprise drilling, reaming and/or deburring holes in upper wing skin portion 34, upper external strap 52, middle rib 40, lower wing skin 38, lower external strap 56 and lower internal strap 58 for fasteners 54 to be installed at seams 32, 36 while wings 14 of first and second portions 12A, 12B are positioned in their respective in-use configurations (e.g., with proper dihedral angle, pitch, roll) relative to each other. Accordingly, the advanced preparation (e.g., pre-drilling of holes) of the interface at the first facility may facilitate the assembly of first and second portions 12A, 12B at their proper positions (including orientations) relative to each other at the second facility. Finishing of the interface is intended to encompass tasks associated with making the interface ready for attachment and may include pre-forming corresponding holes in both portions 12A, 12B of wing unit 12 so that subsequent assembly of the two portions 12A, 12B will result in the two portions 12A, 12B being correctly positioned relative to each other. In other words, finishing the interface comprises incorporating in-use relative positional constraints of the two portions 12A, 12B of wing unit 12 into the interface.

Similarly, pressure fences 28A and 28B may be pre-assembled with their respective wings 14A, 14B of wing unit 12 at the first facility to be in their respective in-use positions (including orientations) relative to wing unit 12. This may be achieved in any suitable way. In some embodiments, method 1000 may include positioning wings 14 in their respective in-use configurations relative to each other and then assembling pressure fence 28A with wing 14A and assembling pressure fence 28B with wing 14B so that pressure fences 28A and 28B may be ready to interface with fuselage portion 18A when wing unit 12 is assembled with fuselage portion 18A.

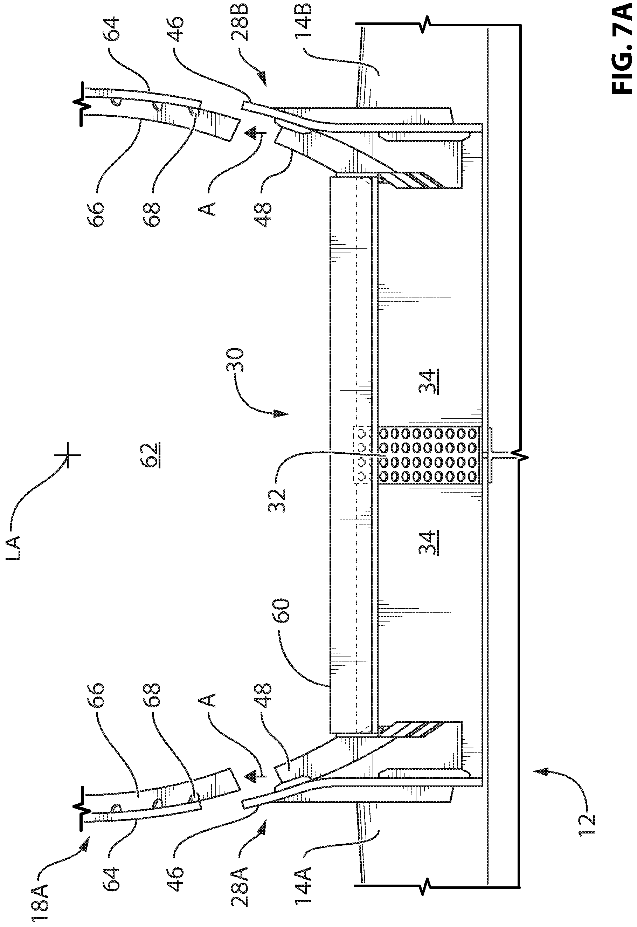

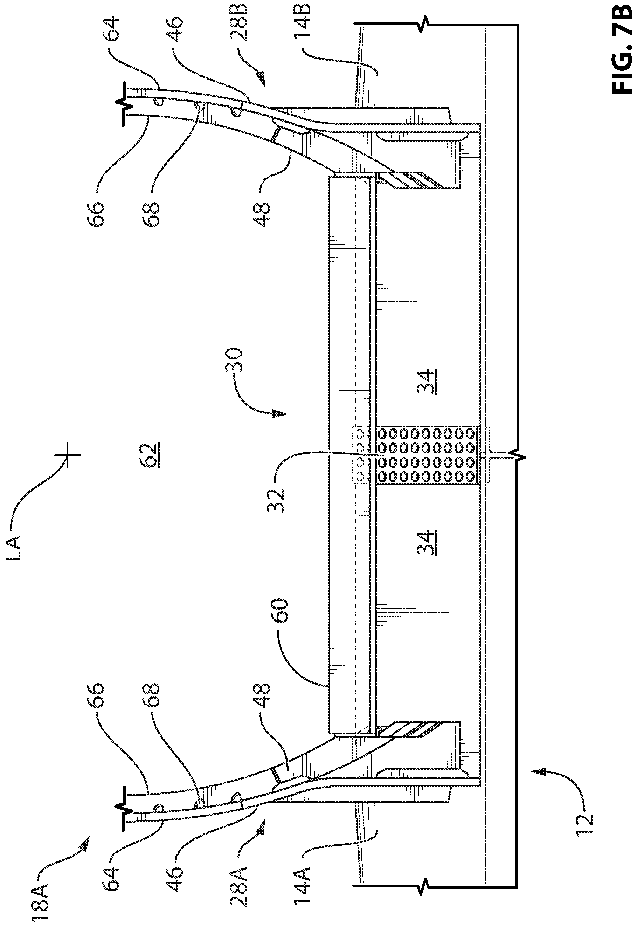

FIGS. 7A and 7B graphically illustrate a method for producing an aircraft structural assembly using fuselage portion 18A partially defining a pressure vessel and pre-assembled wing unit 12 as described herein. FIGS. 7A and 7B show parts of fuselage portion 18A and of wing unit 12 when viewed along longitudinal axis LA from an aft position relative to wing unit 12 and toward a forward direction relative to aircraft 10. In various embodiments, the method may comprise assembling wing unit 12 with fuselage portion 18A so that pressure fence 28A defines a first part of the pressure vessel partially defined by fuselage portion 18A and second pressure fence 28B defines a second part of the pressure vessel partially defined by fuselage portion 18A. Respective upper portions of pressure fences 28A, 28B may be configured to interface with one or more structural members of fuselage portion 18A.

Fuselage portion 18A may comprise cabin floor 60, which is only partially shown in FIGS. 7A and 7B. Cabin floor 60 may partially define passenger cabin 62 disposed within the pressure vessel cooperatively defined by fuselage portion 18A and wing unit 12. For example, the pressure vessel may be partially defined by fuselage skin 64, fence skins 46, upper wing skin portion 34 and other components. FIG. 7A shows wing unit 12 being brought toward fuselage portion 18A along arrows A and FIG. 7B shows wing unit 12 being in its final (i.e., in-use) assembled position relative to fuselage portion 18A. Fuselage potion 18A may comprise fuselage frames 66 supporting and generally defining the shape of fuselage skin 64. Fuselage portion 18A may also comprise stringers 68, sometimes called longerons, attached to fuselage frames 66 and extending generally along longitudinal axis LA. Stringers 68 may also support fuselage skin 64.

The use of pressure fences 28A, 28B as disclosed herein may facilitate the assembly of wing unit 12 to fuselage portion 18A. For example, joining interfaces between wing unit 12 and fuselage portion 18A may include joints between fence frames 48 and respective fuselage frames 66 and also joints between fence skins 46 and respective stringers 68 as explained below. Such joining interfaces may be disposed vertically above cabin floor 60 and facilitate access to such joining interfaces by assembly personnel. For example, an upper portion of each fence skin 46 may be attached to a respective corresponding stringer 68 of fuselage portion 18A.

The shape and configuration of pressure fences 28A, 28B may further facilitate assembly whereby pressure fences 28A and 28B may cooperatively define a cradle or receptacle comprising a "V" shape into which part of fuselage portion 18A such as fuselage frames 66 may be received when wing unit 12 is raised toward fuselage portion 18A and approaches its final assembled position relative to fuselage portion 18A. For example, each fence skin 46 may extend upwardly relative to upper wing skin portion 34 and also in a respective lateral direction (i.e., away from each other). The shape cooperatively defined by pressure fences 28A and 28B may, in some embodiments, facilitate assembly by providing some self-alignment function as wing unit 12 and fuselage portion 18A are brought together. Fence skins 46 may each overlap one or more fuselage frames 66. In some embodiments, fence skins 46 may be attached to fuselage frames 66.

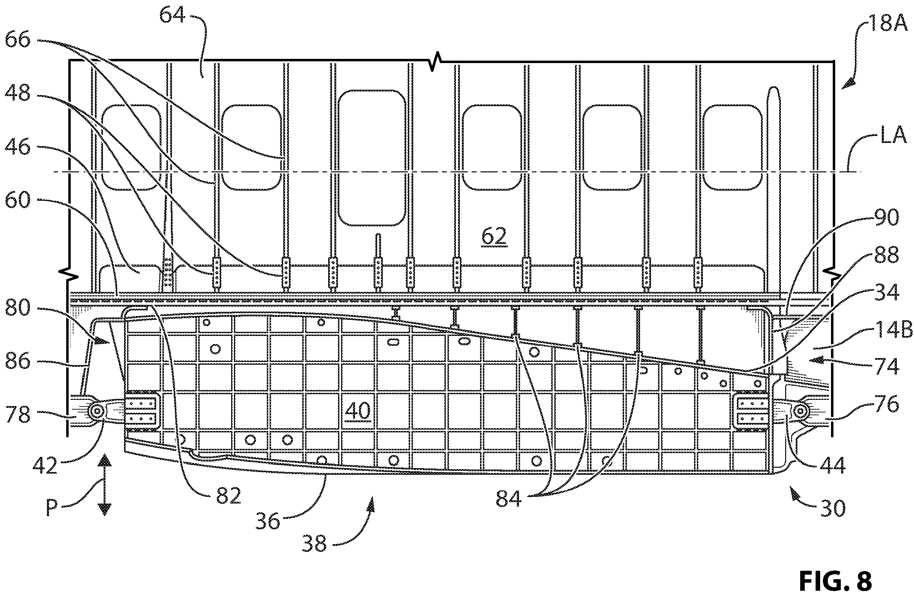

FIG. 8 is an axial cross-sectional view through fuselage portion 18A and wing unit 12 showing fuselage portion 18A and wing unit 12 in their respective assembled in-use positions. The assembly of wing unit 12 with fuselage portion 18A may be achieved by bringing wing unit 12 and fuselage portion 18A together using fuselage supports 24 and/or wing supports 26 (see FIG. 2) and then attaching wing unit 12 and fuselage portion 18A together at a plurality of joining locations. During an early stage of the assembly process, wing unit 12 and fuselage portion 18A may define a first structural interface intended to provide one or more initial points of attachment and a second structural interface intended to provide one or more subsequent points of attachment between wing unit 12 and fuselage portion 18A. The first structural interface may be configured so that when fuselage portion 18A and wing unit 12 are attached together at the first structural interface but are unattached at the second structural interface, the first structural interface permits relative positional adjustment between wing unit 12 and fuselage portion 18A.

The second structural interface is initially unfinished (i.e., does not incorporate final in-use relative positional constraints of wing unit 12 and fuselage portion 18A) so that it is finished only after such relative positional adjustment between fuselage portion 18A and wing unit 12. The first structural interface may accordingly provide an initial point of attachment between fuselage portion 18A and wing unit 12 and also accommodate some relative positional adjustment between fuselage portion 18A and wing unit 12 in one or more degrees of freedom within respective predetermined tolerances. The relative positional adjustment between fuselage portion 18A and wing unit 12 may be achieved by way of fuselage supports 24 and/or wing supports 26 (see FIG. 2), which may be actuated. The positional adjustment afforded by the first structural interface may permit the second interface to be finished only after the desired positional adjustment has been done and while wing unit 12 and fuselage portion 18A are attached via the first interface and are supported by wing supports 26 and fuselage supports 24 respectively. The finishing of the second interface may, for example, comprise drilling, reaming and/or deburring holes to receive suitable fasteners.

Finishing the second interface in situ while wing unit 12 and fuselage portion 18A are in their final positions relative to each other may facilitate the assembly process. For example, instead of trying to align pre-drilled holes on parts of wing unit 12 with pre-drilled holes on parts of fuselage portion 18A at different joining locations and facing challenges associated with tolerance stack-up, the finishing of the holes in situ facilitates the alignment of the corresponding holes. In some embodiments, one or more first holes in one of wing unit 12 or fuselage portion 18A may be pre-drilled while corresponding one or more second holes in the other of wing unit 12 or fuselage portion 18A may be drilled and/or reamed after positional adjustment while using the first holes as respective guides to ensure suitable alignment of the first holes and second holes. In some embodiments, one or more first holes in wing unit 12 may be absent or otherwise unfinished (e.g., pilot holes only) and one or more corresponding second holes in fuselage portion 18A may also be absent or otherwise unfinished so that the first holes and the second holes may be drilled and/or reamed (e.g., together, simultaneously) after positional adjustment to ensure suitable alignment.

The first structural interface and the second structural interface may each comprise one joint or a plurality of joints at different locations. The first interface providing the initial point(s) of attachment comprises one or more aft tension fittings 74 for attachment with aft pressure wall 88 of fuselage portion 18A. Aft tension fitting(s) 74 may be disposed at or proximal to an aft portion of wing unit 12. For example, aft tension fittings 74 may be attached to or integrated into an aft spar of wing unit 12. In some embodiments, the second interface providing the subsequent point(s) of attachment may, for example, comprise: aft keel beam fitting 44 of wing unit 12 for attachment with aft keel beam 76 of fuselage portion 18A; forward keel beam fitting 42 of wing unit 12 for attachment with forward keel beam 78 of fuselage portion 18A; one or more forward tension fittings 80 of wing unit 12 for attachment with one or more respective floor beams 82 supporting cabin floor 60 of fuselage portion 18A; upper portions of fence skins 46 of wing unit 12 for attachment with respective stringers 68 of fuselage portion 18A and fence frames 48 of wing unit 12 for attachment with respective fuselage frames 66.

In some embodiments, some or all of the joining locations between wing unit 12 and fuselage portion 18A may be disposed outside of wing unit 12 so that the need for assembly personnel to physically access the interior of wing unit 12 during structural assembly of wing unit 12 with fuselage assembly 18A may be reduced or eliminated. Additionally, some of the joining locations between pressure fences 28A, 28B may be disposed above cabin floor 60 of fuselage portion 18A to further facilitate access to such joining locations. The joining locations disclosed herein may facilitate the structural assembly process and also promote a shorter assembly time.

In various embodiments, the first interface may accommodate positional adjustment to achieve pitch adjustment of wing unit 12 relative to fuselage portion 18A. For example, aft tension fitting(s) 74, located at an aft portion of wing unit 12 may permit vertical adjustment of a forward portion of wing unit 12 along arrow P within a predetermined tolerance for the purpose of achieving pitch adjustment. Such pitch adjustment may be achieved by causing some rotation or pivoting movement of wing unit 12 about tension fitting(s) 74 for example. In some embodiments, the first interface may be configured to additionally or instead accommodate positional yaw and/or roll adjustment of wing unit 12 relative to fuselage portion 18A while wing unit 12 and fuselage portion 18A are unattached at the second interface.

In some embodiments one or more struts 84 may extend between floor beams(s) 82 and upper wing skin portion 34. Struts 84 may define respective load paths between upper wing skin portion 34 and the structure of fuselage portion 18A. Struts 84 may provide structural support for upper wing skin portion 34. In some embodiments, struts 84 may be distributed across the area of upper wing skin portion 34. In reference to the curvature of upper wing skin portion 34, at least some of upper wing skin portion 34 may be non-parallel to floor beam(s) 82.

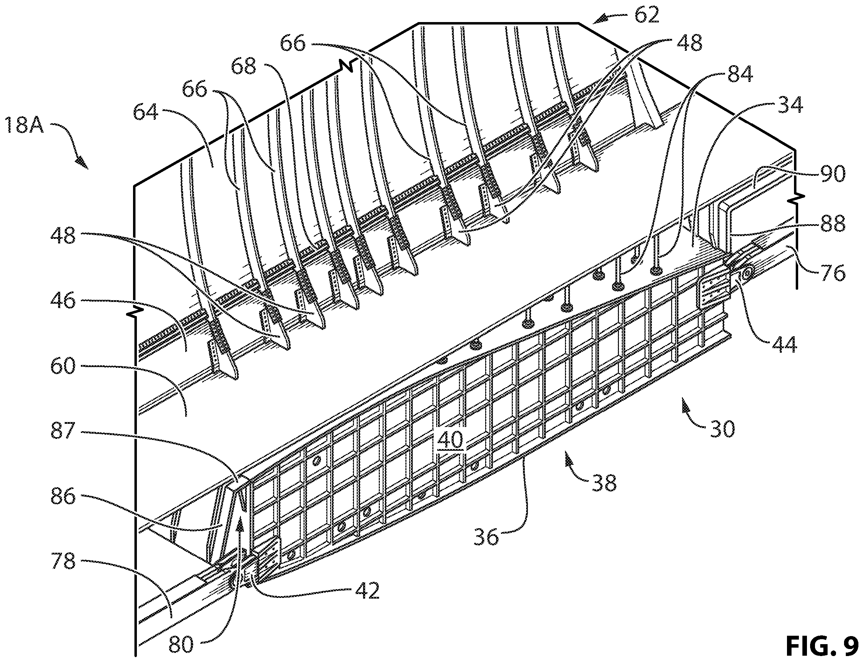

FIG. 9 is perspective view of an axial cross-section through fuselage portion 18A and wing unit 12. The pressure vessel defined around passenger cabin 62 in fuselage portion 18A may be partially defined by fuselage skin 64, forward pressure wall 86, forward pressure floor 87, upper wing skin portion 34 of wing unit 12, fence skins 46, aft pressure wall 88 and aft pressure floor 90. Upper wing skin portion 34 may serve as a pressure floor to such pressure vessel instead of requiring a separate pressure floor to be disposed above upper wing skin portion 34. Joining locations between upper wing skin portion 34 and forward pressure wall 86 and between upper wing skin portion 34 and aft pressure wall 88 may comprise fay surface sealant to achieve suitable sealing for withstanding pressurization of passenger cabin 62. The region that is shown forward of forward pressure wall 86 may be a cargo compartment of aircraft 10.

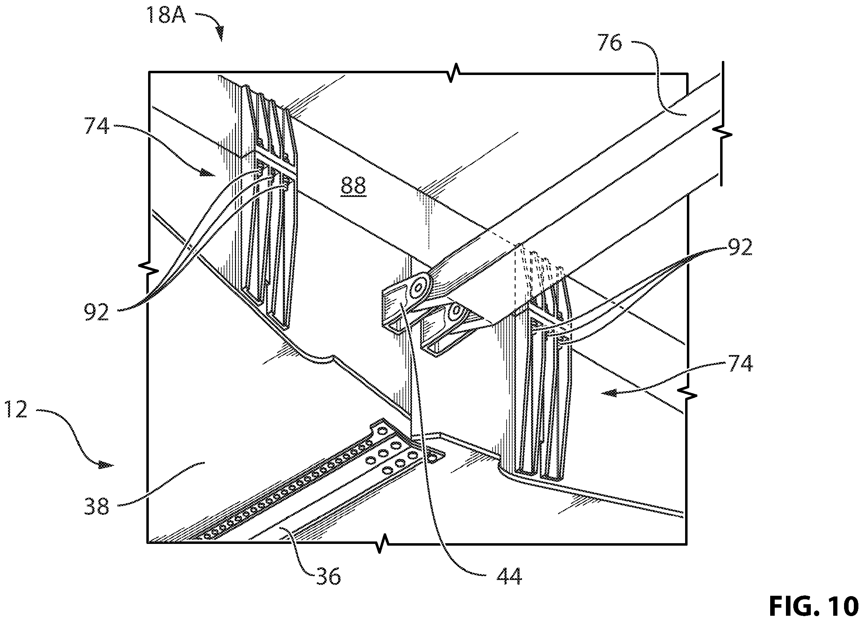

FIG. 10 is perspective view of an aft portion of wing unit 12 assembled with fuselage portion 18A. In some embodiments, wing unit 12 may comprise two aft tension fittings 74 serving as the first interface to provide initial attachment of wing unit 12 to fuselage portion 18A. Aft tension fittings 74 may each be part of a bolted joint for attaching an aft portion of wing unit 12 to aft pressure wall 88 of fuselage portion 18A using bolts 92. In some embodiments, aft tension fittings 74 may be disposed on opposite lateral sides of longitudinal axis LA of the fuselage portion 18A. In some embodiments, aft tension fittings 74 may be disposed at equal lateral distances from longitudinal axis LA.

In some embodiments, both aft tension fittings 74 may be disposed at a substantially common longitudinal position relative to longitudinal axis LA. The longitudinal alignment of both aft tension fittings 74 may effectively define a hinge line about which pitch adjustment of wing unit 12 may be made within predetermined tolerances when wing unit 12 and fuselage portion 18A are attached at aft tension fittings 74 but are unattached at the other joining locations of the second structural interface.

Aft keel beam fitting 44 may be part of the second interface which is finished after relative positional adjustment between wing unit 12 and fuselage portion 18A. A suitable fastener such as a bolt or pin may be used to attach aft keel beam fitting 44 to aft keel beam 76. In some embodiments, one or more holes for receiving the fastener may be pre-finished in aft keel beam fitting 44 and may be used as a guide for finishing (e.g., drilling, reaming) corresponding one or more holes in aft keel beam 76 after the relative positional adjustment between wing unit 12 and fuselage portion 18A to ensure acceptable alignment. Alternatively, one or more holes for receiving the fastener may be pre-finished in aft keel beam fitting 46 and may be used as a guide for finishing (e.g., drilling, reaming) corresponding one or more holes in aft keel beam fitting 44 after the relative positional adjustment between wing unit 12 and fuselage portion 18A to ensure acceptable alignment.

Forward keel beam fitting 42 (shown in FIG. 9) may also be part of the second interface and may be configured similarly to aft keel beam fitting 44. Accordingly, forward keel beam fitting 42 may be attached to forward keel beam 78 in the same or in a similar manner as aft keel beam fitting 44 is attached to aft keel beam 76.

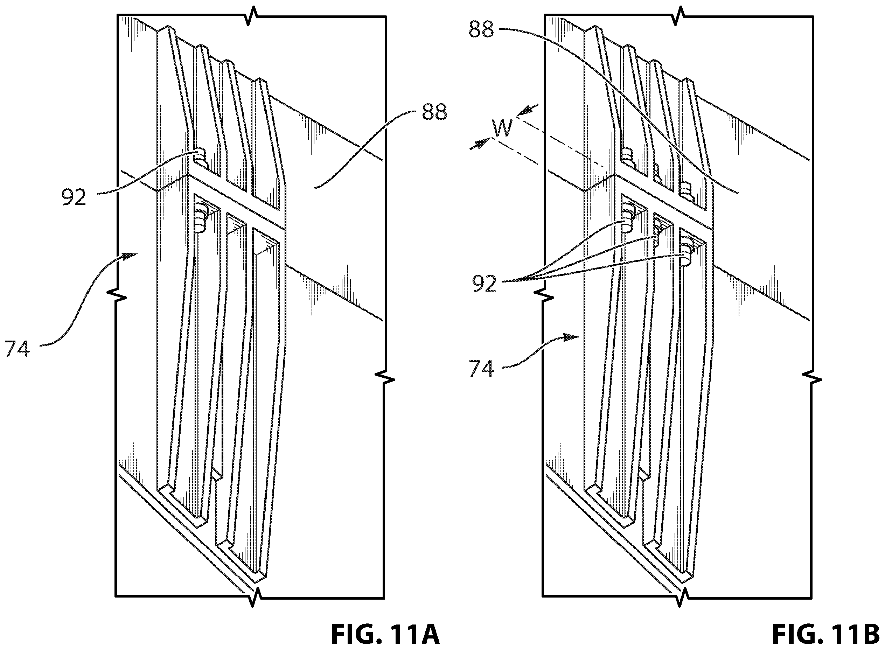

FIGS. 11A shows a bolted joint between wing unit 12 and fuselage portion 18A comprising aft tension fitting 74, in a configuration permitting relative positional adjustment between wing unit 12 and fuselage portion 18A. FIG. 11B shows the bolted joint of FIG. 11A in a fully assembled configuration. In the fully assembled configuration of FIG. 11B where wing unit 12 and fuselage portion 18A are completely assembled together in their in-use configuration, each bolted joint may comprise one or more (e.g., three) bolts 92 that are torqued to their respective final torque values. However, in the adjustment configuration shown in FIG. 11A, the one or more bolts 92 may be torqued to respective values that are lower than their respective final torque values. In some embodiments, such lower torque values may be about 10% of the respective final torque values.

In some embodiments, the adjustment configuration of FIG. 11A may include fewer bolts 92 than the final configuration of FIG. 11B. For example, in the adjustment configuration, each aft tension fitting 74 may be fitted with only one (e.g., slave) bolt 92 to provide an initial point of attachment. The hole formed in aft tension fitting 74 for receiving bolt 92 is made oversize relative to bolt 92 so as to provide an allowance for relative positional adjustment (e.g., pitch and yaw) between wing unit 12 and fuselage portion 18A. In some embodiment, the hole formed in aft pressure wall 88 for receiving bolt 92 may be made slightly oversize relative to bolt 92 so as to provide an allowance for relative positional adjustment (e.g., pitch and yaw) between wing unit 12 and fuselage portion 18A. In this configuration, the holes for the other bolts 92 used in the final configuration may be absent or otherwise unfinished and may be finished at the suitable locations and orientations only after the positional adjustment.

The use of aft tension fittings 74 in the adjustment configuration of FIG. 11A may facilitate the relative positional adjustment between wing unit 12 and fuselage assembly 18A using wing supports 26 and fuselage supports 24 (shown in FIG. 2) by providing an initial attachment point between wing unit 12 and fuselage assembly 18A that anchors the two assemblies together yet that also accommodates relative positional adjustment.

In order to facilitate pitch adjustment, an interfacing contact area in the bolted joints at aft tension fitting 74 may be relatively small relative to a chord length of wing unit 12 where the chord refers to an imaginary straight line joining the leading and trailing edges of wing 14A and/or wing 14B. For example, in some embodiments, a width W of such contact area may be about 1 % of a maximum chord length of wing unit 12. In some embodiments, the width W of the contact area may be less than about 1% of the maximum chord length of wing unit 12. In some embodiments, the width W of the contact area may be less than about 3% of the maximum chord length of wing unit 12. In some embodiments, the width W of the contact area may be between about 1% and about 3% of the maximum chord length of wing unit 12. In some embodiments, the width W of the contact area may be less than 5% of the maximum chord length of wing unit 12. In some embodiments, the width W of the contact area may be between about 1% and about 5% of the maximum chord length of wing unit 12.

Roll positional adjustment of wing unit 12 relative to fuselage portion 18A may comprise shimming interfacing contact areas of the one or more bolted joints comprising aft tension fittings 74. For example, the laterally-opposed positions of the two aft tension fittings 74 relative to longitudinal axis LA may facilitate such roll positional adjustment.

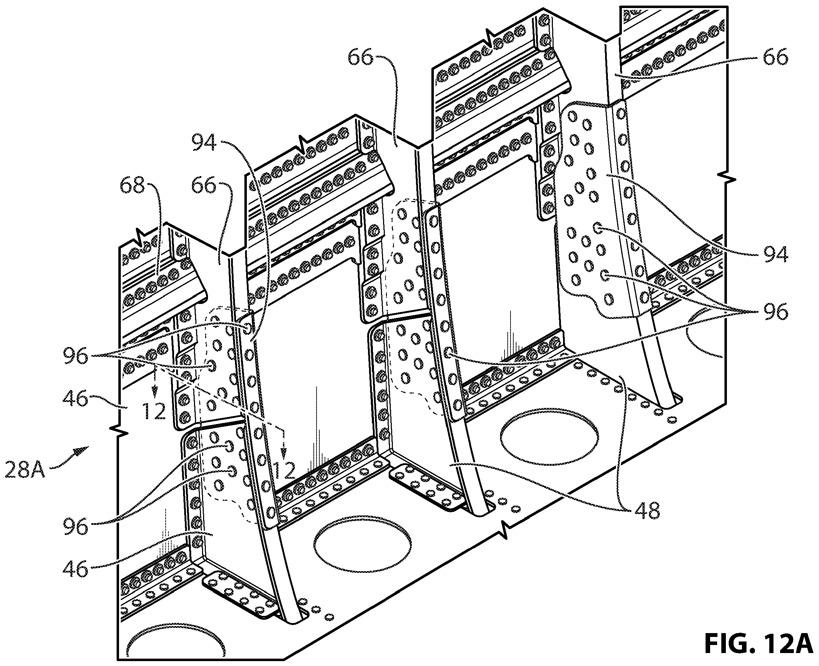

FIG. 12A is a perspective view of exemplary splice joints between fence frames 48 of wing unit 12 and fuselage frames 66 of fuselage portion 18A. These joints may each comprise frame splice 94 overlapping both fence frames 48 and fuselage frames 66 and may be secured to fence frames 48 and fuselage frames 66 by way of suitable fasteners 96. These splice joints may be part of the second interface which is finished after relative positional adjustment between wing unit 12 and fuselage portion 18A. In some embodiments, one or more holes for receiving fasteners 96 may initially be unfinished and may only be finished (e.g., drilled) after the relative positional adjustment between wing unit 12 and fuselage portion 18A to ensure suitable alignment.

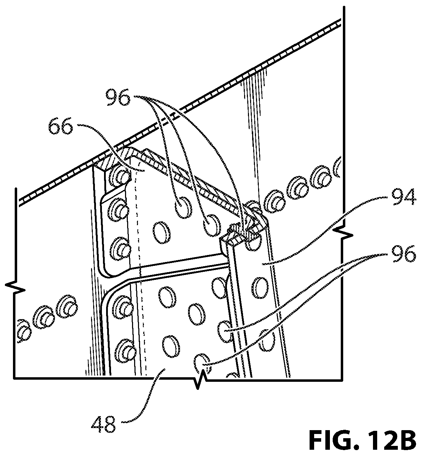

FIG. 12B is a perspective cross-sectional view taken along line 12-12 of FIG. 12A extending through splice 94 and fuselage frame 66.

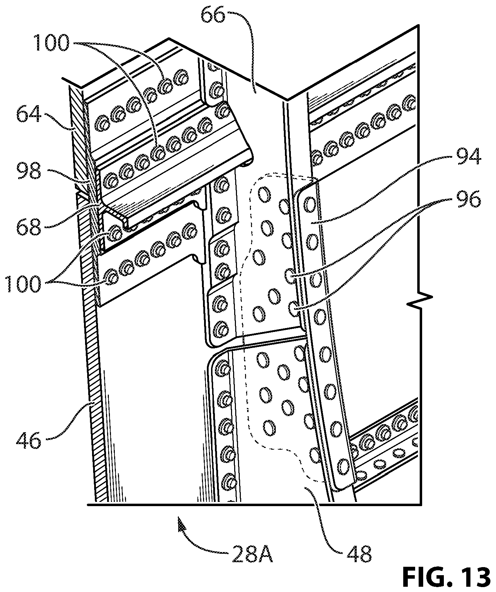

FIG. 13 is a perspective cross-sectional view through an exemplary joint between fence skin 46 of wing unit 12 and stringer 68 of fuselage portion 18A. The cross-section of FIG. 13 is taken transversely to stringer 68. An upper portion of fence skin 46 may be attached to stringer 68, which may be disposed above cabin floor 60 (see FIGS. 7A and 7B). This joint may also comprise a splice joint between fuselage skin 64 and fence skin 46 where skin splice 98 may overlap both fuselage skin 64 and fence skin 46 and may be secured to both fuselage skin 64 and fence skin 46 by way of suitable fasteners 100 extending through stringer 68, through skin splice 98 and through fuselage skin 64 or fence skin 46. This joint may also be part of the second interface which is finished after relative positional adjustment between wing unit 12 and fuselage portion 18A. In some embodiments, one or more holes for receiving fasteners 100 may initially be unfinished and may only be finished (e.g., drilled) after the relative positional adjustment between wing unit 12 and fuselage portion 18A to ensure suitable alignment.

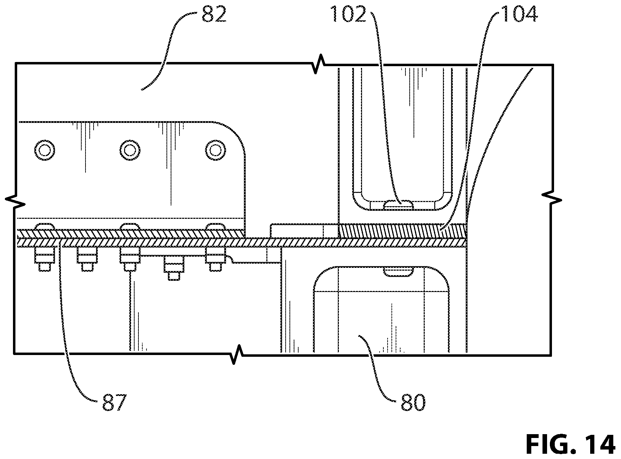

FIG. 14 is a perspective view showing an exemplary forward tension fitting 80 of wing unit 12 for attaching a forward portion of wing unit 12 to floor beam 82. It is understood that wing unit 12 may comprise a plurality of such forward tension fittings 82 for attachment to a plurality of respective floor beams 82 using fastener 102. In some embodiments, forward pressure floor 87 may be disposed between forward tension fitting 80 and floor beam 82 and fastener 102 may also extend through forward pressure floor 104. In some embodiments, suitable shims 104 may also be disposed between forward tension fitting 80 and floor beam 82.

This joint may also be part of the second interface which is finished after relative positional adjustment between wing unit 12 and fuselage portion 18A. In some embodiments, one or more holes for receiving fasteners 102 may initially be unfinished and may only be finished (e.g., drilled) after the relative positional adjustment between wing unit 12 and fuselage portion 18A to ensure suitable alignment. This joint may may comprise fay surface sealant to achieve suitable sealing for withstanding pressurization of passenger cabin 62.

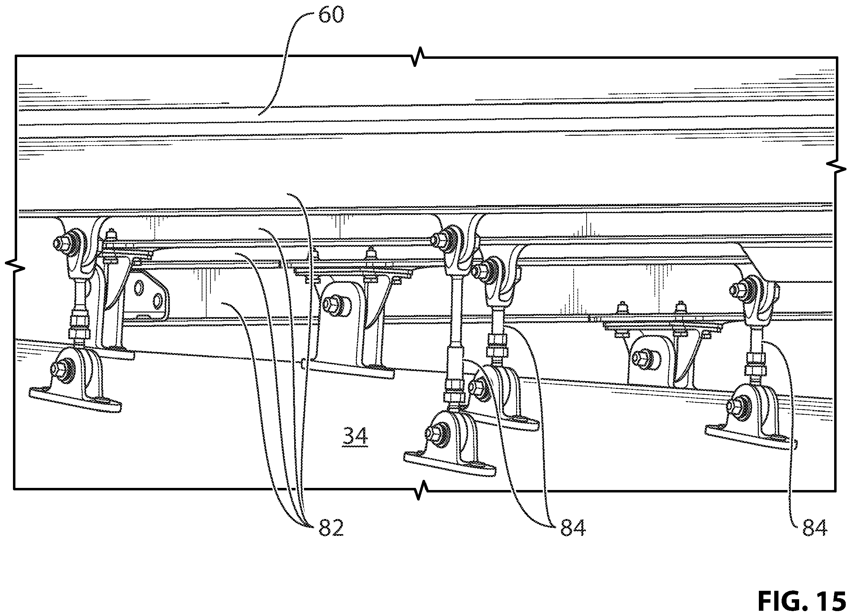

FIG. 15 is a perspective view of upper wing skin portion 34 of wing unit 12 in relation to floor beams 82 of fuselage portion 18A. Struts 84 may be installed after the relative positional adjustment between wing unit 12 and fuselage portion 18A. Struts 84 may define respective load paths between upper wing skin portion 34 and floor beams 82. Struts 84 may be distributed across the area of upper wing skin portion 34. Struts 84 may comprise turnbuckles or otherwise permit lengthwise adjustment of struts 84 to facilitate installation.

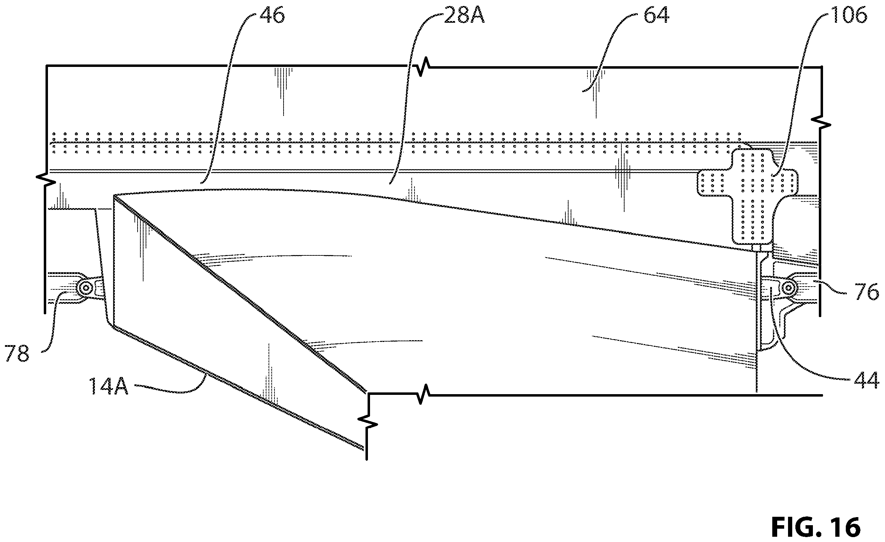

FIG. 16 is a perspective view of an exterior of the pressure fence 28A when wing unit 12 and fuselage portion 18A are assembled together. In some embodiments one or more additional skin splices such as cruciform doubler 106 may be used to attach fence skin 46 to fuselage skin 64. When aircraft 10 is fully assembled and ready for service, the region of the root of wing 14A including fence skin 46 may be covered by suitable aerodynamic fairing(s) so that such additional skin splices applied to the exterior of fence skin 46 may not affect aerodynamic performance.

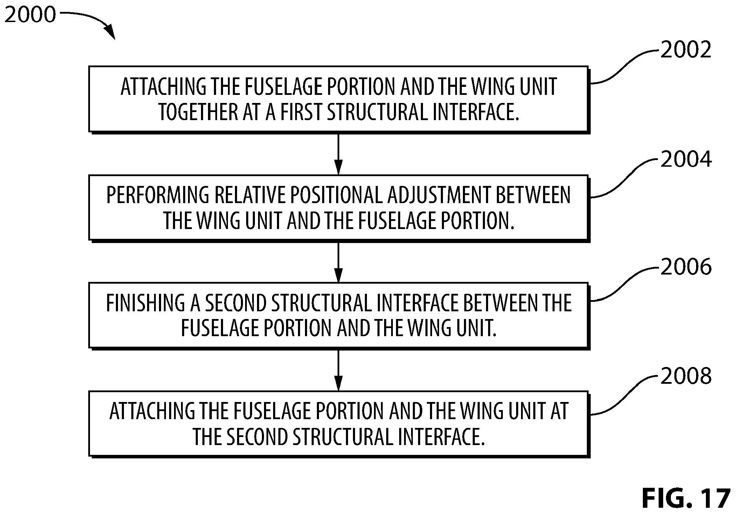

FIG. 17 is a flowchart illustrating an exemplary method 2000 for assembling wing unit 12 with fuselage portion 18A. It is understood that the execution of method 2000 is not limited to the specific exemplary construction of wing unit 12 and fuselage portion 18A disclosed herein. In various embodiments, method 2000 may comprise:
attaching fuselage portion 18A and wing unit 12 together at a first structural interface (e.g., aft tension fittings 74) between fuselage portion 18A and wing unit 12 (see block 2002), the first structural interface being configured to permit relative positional adjustment between wing unit 12 and fuselage portion 18A;
while fuselage portion 18A and wing unit 12 are attached at the first structural interface and while fuselage portion 18A and wing unit 12 are unattached at an unfinished second structural interface, performing relative positional adjustment between wing unit 12 and fuselage portion 18A (see block 2004);
after the relative positional adjustment between wing unit 12 and fuselage portion 18A, finishing the second structural interface between fuselage portion 18A and the wing unit 12 (see block 2006) while wing unit 12 and fuselage portion 18A are in their adjusted configuration; and
attaching the fuselage portion and the wing unit at the second structural interface after finishing the second structural interface (see block 2008).

In some embodiments, wing unit 12 may be temporarily moved away from fuselage portion 18A (or fuselage portion 18A may be temporarily moved away from wing unit 12) after finishing of the second structural interface and before attaching fuselage portion 18A and wing unit 12 at the second structural interface (i.e., between blocks 2006 and 2008). This temporary movement may require detachment of first structural interface (e.g., aft tension fittings 74) so that wing unit 12 may be moved far enough away from fuselage portion 18A to permit deburring of newly drilled holes and also the application of fay surface sealant to some of the joining surfaces for example. Wing unit 12 and fuselage portion 18A may then be brought back together to be attached at both the first interface and at the second interface in their fully-assembled configuration.

In various embodiments, the relative positional adjustment may comprise a pitch adjustment, a yaw adjustment and/or a roll adjustment of wing unit 12 relative to fuselage portion 18A.

In some embodiments, attaching fuselage portion 18A and wing unit 12 at the first structural interface may comprise torqueing a bolted joint of the first structural interface to a value that is less than (e.g., 10% of) a final torque value of the bolted joint. The relative positional adjustment may comprise rotating wing unit 12 about the first structural interface.

The above description is meant to be exemplary only, and one skilled in the relevant arts will recognize that changes may be made to the embodiments described without departing from the scope of the invention disclosed. The present disclosure may be embodied in other specific forms without departing from the subject matter of the claims. The present disclosure is intended to cover and embrace all suitable changes in technology. Modifications which fall within the scope of the present invention will be apparent to those skilled in the art, in light of a review of this disclosure, and such modifications are intended to fall within the appended claims. Also, the scope of the claims should not be limited by the preferred embodiments set forth in the examples, but should be given the broadest interpretation consistent with the description as a whole.

## Claims

1. A structural assembly of an aircraft (10), the assembly comprising:
a fuselage portion (18A) comprising an aft pressure wall (88); and
a wing unit (12) configured to be assembled with the fuselage portion (18A), the wing unit (12) comprising a first wing (14A) extending in a first lateral direction relative to the fuselage portion (18A) and a second wing (14B) extending in an opposite second lateral direction relative to the fuselage portion (18A), the first wing (14A) and the second wing (14B) being attached together;
wherein: the fuselage portion (18A) and the wing unit (12) are attached together at a first structural interface between the fuselage portion (18A) and the wing unit (12);
the fuselage portion (18A) and the wing unit (12) are unattached at a second structural interface between the fuselage portion (18A) and the wing unit (12), the second structural interface not having final in-use positional constraints between the wing unit (12) and the fuselage portion (18A);
the first structural interface being configured to permit relative positional adjustment between the wing unit (12) and the fuselage portion (18A) while the fuselage portion (18A) and the wing unit (12) are attached at the first structural interface and unattached at the second structural interface to permit incorporation of final in-use positional constraints between the wing unit (12) and the fuselage portion (18A) in the second interface while the fuselage portion (18A) and the wing unit (12) are attached at the first interface and after the relative positional adjustment; and
**characterized in that** the first structural interface comprises at least one aft tension fitting (74) for attachment with the aft pressure wall (88) of the fuselage portion (18A), the at least one aft tension fitting (74) comprising an oversize hole formed therein for receiving a bolt (92), the oversize hole being oversized relative to the bolt (92) to provide an allowance permitting said relative positional adjustment between the wing unit (12) and the fuselage portion (18A); and
wherein the at least one aft tension fitting (74) is disposed outside of the wing unit (12).

2. The assembly as defined in claim 1, wherein the first interface is configured to permit a pitch adjustment of the wing unit (12) relative to the fuselage portion (18A) when the fuselage portion (18A) and the wing unit (12) are attached at the first interface and unattached at the second interface.

3. The assembly as defined in any one of claims 1 to 2, wherein the first interface is configured to permit a yaw adjustment of the wing unit (12) relative to the fuselage portion (18A) when the fuselage portion (18A) and the wing unit (12) are attached at the first interface and unattached at the second interface.

4. The assembly as defined in any one of claims 1 to 3, wherein the first interface is configured to permit a roll adjustment of the wing unit (12) relative to the fuselage portion (18A) when the fuselage portion (18A) and the wing unit (12) are attached at the first interface and unattached at the second interface.

5. The assembly as defined in any one of claims 1 to 4, wherein the first interface is disposed at or proximal to an aft portion of the wing unit (12).

6. The assembly as defined in any one of claims 1 to 5, wherein the first interface defines a contact area having a longitudinal dimension along a longitudinal axis of the fuselage portion (18A) that is about 1% of a maximum chord length of the wing unit (12).

7. The assembly as defined in any one of claims 1 to 5, wherein the first interface defines a contact area having a longitudinal dimension along a longitudinal axis of the fuselage portion (18A) that less than 5% of a maximum chord length of the wing unit (12).

8. The assembly as defined in any one of claims 1 to 7, wherein the first interface comprises a bolted joint.

9. The assembly as defined in claim 8, wherein the bolted joint is torqued to a value that is less than a final torque value for the bolted joint.

10. The assembly as defined in any one of claims 1 to 8, wherein the first interface comprises a first bolted joint and a second bolted joint, the first bolted joint and the second bolted joint being disposed on opposite lateral sides of a longitudinal axis of the fuselage portion (18A).

11. A method for assembling a wing unit (12) with a fuselage portion (18A) of an aircraft (10), wherein the fuselage portion (18A) comprises an aft pressure wall (88), and where the wing unit (12) comprises a first wing (14A) for extending in a first lateral direction relative to the fuselage portion (18A) and a second wing (14B) for extending in an opposite second lateral direction relative to the fuselage portion (18A) and where the first wing (14A) and the second wing (14B) are attached together, the method comprising:
attaching the fuselage portion (18A) and the wing unit (12) together at a first structural interface between the fuselage portion (18A) and the wing unit (12), the first structural interface being configured to permit relative positional adjustment between the wing unit (12) and the fuselage portion (18A);
while the fuselage portion (18A) and the wing unit (12) are attached at the first structural interface and while the fuselage portion (18A) and the wing unit (12) are unattached at a second structural interface, said second structural interface not having final in-use positional constraints between the wing unit (12) and the fuselage portion (18A), performing relative positional adjustment between the wing unit (12) and the fuselage portion (18A);
after the relative positional adjustment between the wing unit (12) and the fuselage portion (18A), incorporating final in-use positional constraints in the second structural interface between the fuselage portion (18A) and the wing unit (12) while the wing unit (12) and the fuselage portion (18A) are in their adjusted configuration;
attaching the fuselage portion (18A) and the wing unit (12) at the second structural interface after incorporating the final in-use positional constraints in the second structural interface; and
**characterized in that** the first structural interface comprises at least one aft tension fitting (74) for attachment with the aft pressure wall (88) of the fuselage portion (18A), the at least one aft tension fitting (74) comprising an oversize hole formed therein for receiving a bolt (92), the oversize hole being oversized relative to the bolt (92) to provide an allowance permitting said relative positional adjustment between the wing unit (12) and the fuselage portion (18A); and
wherein the at least one aft tension fitting (74) is disposed outside of the wing unit (12).

12. The method as defined in claim 11, wherein the relative positional adjustment comprises a pitch adjustment of the wing unit (12) relative to the fuselage portion (18A).

13. The method as defined in any one of claims 11 to 12, wherein the relative positional adjustment comprises a yaw adjustment of the wing unit (12) relative to the fuselage portion (18A).

14. The method as defined in any one of claims 11 to 13, wherein the relative positional adjustment comprises a roll adjustment of the wing unit (12) relative to the fuselage portion (18A).

15. The method as defined in any one of claims 11 to 14, wherein attaching the fuselage portion (18A) and the wing unit (12) at the first structural interface comprises torqueing a bolted joint of the first structural interface to a value that is less than a final torque value for the bolted joint.

## Patentansprüche

1. Strukturbaugruppe eines Luftfahrzeugs (10), wobei die Baugruppe umfasst:
einen Rumpfabschnitt (18A), der eine hintere Druckwand (88) umfasst; und
eine Flügeleinheit (12), die dazu konfiguriert ist, mit dem Rumpfabschnitt (18A) zusammengebaut zu werden, wobei die Flügeleinheit (12) einen ersten Flügel (14A), der sich in einer ersten seitlichen Richtung relativ zu dem Rumpfabschnitt (18A) erstreckt, und einen zweiten Flügel (14B) umfasst, der sich in einer entgegengesetzten zweiten seitlichen Richtung relativ zu dem Rumpfabschnitt (18A) erstreckt, wobei der erste Flügel (14A) und der zweite Flügel (14B) aneinander befestigt sind;
wobei: der Rumpfabschnitt (18A) und die Flügeleinheit (12) an einer ersten strukturellen Schnittstelle zwischen dem Rumpfabschnitt (18A) und der Flügeleinheit (12) aneinander befestigt sind;
der Rumpfabschnitt (18A) und die Flügeleinheit (12) an einer zweiten strukturellen Schnittstelle zwischen dem Rumpfabschnitt (18A) und der Flügeleinheit (12) nicht befestigt sind, wobei die zweite strukturelle Schnittstelle keine endgültigen Betriebs-Positionsbeschränkungen zwischen der Flügeleinheit (12) und dem Rumpfabschnitt (18A) aufweist;
wobei die erste strukturelle Schnittstelle dazu konfiguriert ist, eine relative Positionsanpassung zwischen der Flügeleinheit (12) und dem Rumpfabschnitt (18A) zu ermöglichen, während der Rumpfabschnitt (18A) und die Flügeleinheit (12) an der ersten strukturellen Schnittstelle befestigt und an der zweiten strukturellen Schnittstelle nicht befestigt sind, um den Einbau von endgültigen Betriebs-Positionsbeschränkungen zwischen der Flügeleinheit (12) und dem Rumpfabschnitt (18A) in der zweiten Schnittstelle zu ermöglichen, während der Rumpfabschnitt (18A) und die Flügeleinheit (12) an der ersten Schnittstelle befestigt sind, und nach der relativen Positionsanpassung; und
**dadurch gekennzeichnet, dass** die erste strukturelle Schnittstelle mindestens einen hinteren Spannbeschlag (74) zur Befestigung mit der hinteren Druckwand (88) des Rumpfabschnitts (18A) umfasst, wobei der mindestens eine hintere Spannbeschlag (74) ein überdimensioniertes Loch umfasst, das darin zum Aufnehmen eines Bolzens (92) gebildet ist, wobei das überdimensionierte Loch relativ zu dem Bolzen (92) überdimensioniert ist, um einen Spielraum bereitzustellen, der die relative Positionsanpassung zwischen der Flügeleinheit (12) und dem Rumpfabschnitt (18A) ermöglicht; und
wobei der mindestens eine hintere Spannbeschlag (74) außerhalb der Flügeleinheit (12) angeordnet ist.

2. Baugruppe nach Anspruch 1, wobei die erste Schnittstelle dazu konfiguriert ist, eine Nickanpassung der Flügeleinheit (12) relativ zu dem Rumpfabschnitt (18A) zu ermöglichen, wenn der Rumpfabschnitt (18A) und die Flügeleinheit (12) an der ersten Schnittstelle befestigt und an der zweiten Schnittstelle nicht befestigt sind.

3. Baugruppe nach einem der Ansprüche 1 bis 2, wobei die erste Schnittstelle dazu konfiguriert ist, eine Gieranpassung der Flügeleinheit (12) relativ zu dem Rumpfabschnitt (18A) zu ermöglichen, wenn der Rumpfabschnitt (18A) und die Flügeleinheit (12) an der ersten Schnittstelle befestigt und an der zweiten Schnittstelle nicht befestigt sind.

4. Baugruppe nach einem der Ansprüche 1 bis 3, wobei die erste Schnittstelle dazu konfiguriert ist, eine Rollanpassung der Flügeleinheit (12) relativ zu dem Rumpfabschnitt (18A) zu ermöglichen, wenn der Rumpfabschnitt (18A) und die Flügeleinheit (12) an der ersten Schnittstelle befestigt und an der zweiten Schnittstelle nicht befestigt sind.

5. Baugruppe nach einem der Ansprüche 1 bis 4, wobei die erste Schnittstelle an oder proximal zu einem hinteren Abschnitt der Flügeleinheit (12) angeordnet ist.

6. Baugruppe nach einem der Ansprüche 1 bis 5, wobei die erste Schnittstelle einen Kontaktbereich definiert, der eine Längsabmessung entlang einer Längsachse des Rumpfabschnitts (18A) aufweist, die etwa 1 % einer maximalen Sehnenlänge der Flügeleinheit (12) beträgt.

7. Baugruppe nach einem der Ansprüche 1 bis 5, wobei die erste Schnittstelle einen Kontaktbereich definiert, der eine Längsabmessung entlang einer Längsachse des Rumpfabschnitts (18A) aufweist, die weniger als 5 % einer maximalen Sehnenlänge der Flügeleinheit (12).

8. Baugruppe nach einem der Ansprüche 1 bis 7, wobei die erste Schnittstelle eine Schraubverbindung umfasst.

9. Baugruppe nach Anspruch 8, wobei die Schraubverbindung auf einen Wert angezogen wird, der kleiner als ein endgültiger Drehmomentwert für die Schraubverbindung ist.

10. Baugruppe nach einem der Ansprüche 1 bis 8, wobei die erste Schnittstelle eine erste Schraubverbindung und eine zweite Schraubverbindung umfasst, wobei die erste Schraubverbindung und die zweite Schraubverbindung an gegenüberliegenden lateralen Seiten einer Längsachse des Rumpfabschnitts (18A) angeordnet sind.

11. Verfahren zum Zusammenbauen einer Flügeleinheit (12) mit einem Rumpfabschnitt (18A) eines Luftfahrzeugs (10), wobei der Rumpfabschnitt (18A) eine hintere Druckwand (88) umfasst und wobei die Flügeleinheit (12) einen ersten Flügel (14A) zum Erstrecken in einer ersten seitlichen Richtung relativ zu dem Rumpfabschnitt (18A) und einen zweiten Flügel (14B) zum Erstrecken in einer entgegengesetzten zweiten seitlichen Richtung relativ zu dem Rumpfabschnitt (18A) umfasst und wobei der erste Flügel (14A) und der zweite Flügel (14B) aneinander befestigt sind, wobei das Verfahren umfasst:
Befestigen des Rumpfabschnitts (18A) und der Flügeleinheit (12) zusammen an einer ersten strukturellen Schnittstelle zwischen dem Rumpfabschnitt (18A) und der Flügeleinheit (12), wobei die erste strukturelle Schnittstelle dazu konfiguriert ist, eine relative Positionsanpassung zwischen der Flügeleinheit (12) und dem Rumpfabschnitt (18A) zu ermöglichen;
während der Rumpfabschnitt (18A) und die Flügeleinheit (12) an der ersten strukturellen Schnittstelle befestigt sind und während der Rumpfabschnitt (18A) und die Flügeleinheit (12) an einer zweiten strukturellen Schnittstelle nicht befestigt sind, wobei die zweite strukturelle Schnittstelle keine endgültigen Betriebs-Positionsbeschränkungen zwischen der Flügeleinheit (12) und dem Rumpfabschnitt (18A) aufweist, Durchführen einer relativen Positionsanpassung zwischen der Flügeleinheit (12) und dem Rumpfabschnitt (18A);
nach der relativen Positionsanpassung zwischen der Flügeleinheit (12) und dem Rumpfabschnitt (18A), Einbauen von endgültigen Betriebs-Positionsbeschränkungen in der zweiten strukturellen Schnittstelle zwischen dem Rumpfabschnitt (18A) und der Flügeleinheit (12), während die Flügeleinheit (12) und der Rumpfabschnitt (18A) sich in ihrer angepassten Konfiguration befinden;
Befestigen des Rumpfabschnitts (18A) und der Flügeleinheit (12) an der zweiten strukturellen Schnittstelle nach Einbauen der endgültigen Betriebs-Positionsbeschränkungen in der zweiten strukturellen Schnittstelle; und
**dadurch gekennzeichnet, dass** die erste strukturelle Schnittstelle mindestens einen hinteren Spannbeschlag (74) zur Befestigung mit der hinteren Druckwand (88) des Rumpfabschnitts (18A) umfasst, wobei der mindestens eine hintere Spannbeschlag (74) ein überdimensioniertes Loch umfasst, das darin zum Aufnehmen eines Bolzens (92) gebildet ist, wobei das überdimensionierte Loch relativ zu dem Bolzen (92) überdimensioniert ist, um einen Spielraum bereitzustellen, der die relative Positionsanpassung zwischen der Flügeleinheit (12) und dem Rumpfabschnitt (18A) ermöglicht; und
wobei der mindestens eine hintere Spannbeschlag (74) außerhalb der Flügeleinheit (12) angeordnet ist.

12. Verfahren nach Anspruch 11, wobei die relative Positionsanpassung eine Nickanpassung der Flügeleinheit (12) relativ zu dem Rumpfabschnitt (18A) umfasst.

13. Verfahren nach einem der Ansprüche 11 bis 12, wobei die relative Positionsanpassung eine Gieranpassung der Flügeleinheit (12) relativ zu dem Rumpfabschnitt (18A) umfasst.

14. Verfahren nach einem der Ansprüche 11 bis 13, wobei die relative Positionsanpassung eine Rollanpassung der Flügeleinheit (12) relativ zu dem Rumpfabschnitt (18A) umfasst.

15. Verfahren nach einem der Ansprüche 11 bis 14, wobei das Befestigen des Rumpfabschnitts (18A) und der Flügeleinheit (12) an der ersten strukturellen Schnittstelle Anziehen einer Schraubverbindung der ersten strukturellen Schnittstelle auf einen Wert umfasst, der kleiner als ein endgültiger Drehmomentwert für die Schraubverbindung ist.

## Revendications

1. Ensemble structurel d'un aéronef (10), l'ensemble comprenant :
une partie de fuselage (18A) comprenant une paroi de pression arrière (88) ; et une unité d'aile (12) conçue pour être assemblée avec la partie de fuselage (18A), l'unité d'aile (12) comprenant une première aile (14A) s'étendant dans une première direction latérale par rapport à la partie de fuselage (18A) et une seconde aile (14B) s'étendant dans une seconde direction latérale opposée par rapport à la partie de fuselage (18A), la première aile (14A) et la seconde aile (14B) étant fixées ensemble ;
ladite partie de fuselage (18A) et ladite unité d'aile (12) étant fixées ensemble au niveau d'une première interface structurelle entre la partie de fuselage (18A) et l'unité d'aile (12) ;
ladite partie de fuselage (18A) et ladite unité d'aile (12) étant non fixées au niveau d'une seconde interface structurelle entre la partie de fuselage (18A) et l'unité d'aile (12), la seconde interface structurelle ne présentant pas de contraintes de position finales lors de l'utilisation entre l'unité d'aile (12) et la partie de fuselage (18A) ;
ladite première interface structurelle étant conçue pour permettre un réglage de position relative entre l'unité d'aile (12) et la partie de fuselage (18A) pendant que la partie de fuselage (18A) et l'unité d'aile (12) sont fixées au niveau de la première interface structurelle et non fixées au niveau de la seconde interface structurelle pour permettre l'incorporation de contraintes de position finales lors de l'utilisation entre l'unité d'aile (12) et la partie de fuselage (18A) dans la seconde interface pendant que la partie de fuselage (18A) et l'unité d'aile (12) sont fixées au niveau de la première interface et après le réglage de position relative ; et
**caractérisé en ce que** la première interface structurelle comprend au moins un raccord de traction arrière (74) destiné à être fixé avec la paroi de pression arrière (88) de la partie de fuselage (18A), le au moins un raccord de tension arrière (74) comprenant un trou surdimensionné formé dans celui-ci destiné à recevoir un boulon (92), le trou surdimensionné étant surdimensionné par rapport au boulon (92) pour fournir une tolérance permettant ledit réglage de position relative entre l'unité d'aile (12) et la partie de fuselage (18A) ; et ledit au moins un raccord de tension arrière (74) étant disposé à l'extérieur de l'unité d'aile (12).

2. Ensemble selon la revendication 1, ladite première interface étant conçue pour permettre un réglage en tangage de l'aile (12) par rapport à la partie de fuselage (18A) lorsque la partie de fuselage (18A) et l'unité d'aile (12) sont fixées au niveau de la première interface et non fixées au niveau de la seconde interface.

3. Ensemble selon l'une quelconque des revendications 1 à 2, ladite première interface étant conçue pour permettre un réglage en lacet de l'unité d'aile (12) par rapport à la partie de fuselage (18A) lorsque la partie de fuselage (18A) et l'unité d'aile (12) sont fixées au niveau de la première interface et non fixées au niveau de la seconde interface.

4. Ensemble selon l'une quelconque des revendications 1 à 3, ladite première interface étant conçue pour permettre un réglage en roulis de l'unité d'aile (12) par rapport à la partie de fuselage (18A) lorsque la partie de fuselage (18A) et l'unité d'aile (12) sont fixées au niveau de la première interface et non fixées au niveau de la seconde interface.

5. Ensemble selon l'une quelconque des revendications 1 à 4, ladite première interface étant disposée au niveau ou à proximité d'une partie arrière de l'unité d'aile (12).

6. Ensemble selon l'une quelconque des revendications 1 à 5, ladite première interface définissant une zone de contact possédant une dimension longitudinale le long d'un axe longitudinal de la partie de fuselage (18A) qui est d'environ 1 % d'une longueur de corde maximale de l'unité d'aile (12).

7. Ensemble selon l'une quelconque des revendications 1 à 5, ladite première interface définissant une zone de contact possédant une dimension longitudinale le long d'un axe longitudinal de la partie de fuselage (18A) inférieure à 5 % d'une longueur de corde maximale de l'unité d'aile (12).

8. Ensemble selon l'une quelconque des revendications 1 à 7, ladite première interface comprenant un joint boulonné.

9. Ensemble selon la revendication 8, ledit joint boulonné étant serré jusqu'à une valeur qui est inférieure à une valeur de couple finale pour le joint boulonné.

10. Ensemble selon l'une quelconque des revendications 1 à 8, ladite première interface comprenant un premier joint boulonné et un second joint boulonné, le premier joint boulonné et le second joint boulonné étant disposés sur des côtés latéraux opposés d'un axe longitudinal de la partie de fuselage (18A).

11. Procédé permettant l'assemblage d'une unité d'aile (12) avec une partie de fuselage (18A) d'un aéronef (10), ladite partie de fuselage (18A) comprenant une paroi de pression arrière (88), et où l'unité d'aile (12) comprenant une première aile (14A) destinée à s'étendre dans une première direction latérale par rapport à la partie de fuselage (18A) et une seconde aile (14B) destinée à s'étendre dans une seconde direction latérale opposée par rapport à la partie de fuselage (18A) et où la première aile (14A) et la seconde aile (14B) sont fixées ensemble, le procédé comprenant :
la fixation de la partie de fuselage (18A) et de l'unité d'aile (12) ensemble au niveau d'une première interface structurelle entre la partie de fuselage (18A) et l'unité d'aile (12), la première interface structurelle étant conçue pour permettre un réglage de position relative entre l'unité d'aile (12) et la partie de fuselage (18A) ;
pendant que la partie de fuselage (18A) et l'unité d'aile (12) sont fixées au niveau de la première interface structurelle et pendant que la partie de fuselage (18A) et l'unité d'aile (12) sont non fixées au niveau d'une seconde interface structurelle, ladite seconde interface structurelle ne possédant pas de contraintes de position finales lors de l'utilisation entre l'unité d'aile (12) et la partie de fuselage (18A), la réalisation d'un réglage de position relative entre l'unité d'aile (12) et la partie de fuselage (18A) ;
après le réglage de position relative entre l'unité d'aile (12) et la partie de fuselage (18A), l'incorporation des contraintes de position finales lors de l'utilisation dans la seconde interface structurelle entre la partie de fuselage (18A) et l'unité d'aile (12) pendant que l'unité d'aile (12) et la partie de fuselage (18A) sont dans leur configuration réglée ;
la fixation de la partie de fuselage (18A) et de l'unité d'aile (12) au niveau de la seconde interface structurelle après l'incorporation des contraintes de position finales lors de l'utilisation dans la seconde interface structurelle ; et
**caractérisé en ce que** la première interface structurelle comprend au moins un raccord de traction arrière (74) destiné à être fixé avec la paroi de pression arrière (88) de la partie de fuselage (18A), le au moins un raccord de tension arrière (74) comprenant un trou surdimensionné formé dans celui-ci destiné à recevoir un boulon (92), le trou surdimensionné étant surdimensionné par rapport au boulon (92) pour fournir une tolérance permettant ledit réglage de position relative entre l'unité d'aile (12) et la partie de fuselage (18A) ; et ledit au moins un raccord de tension arrière (74) étant disposé à l'extérieur de l'unité d'aile (12).

12. Procédé selon la revendication 11, ledit réglage de position relative comprenant un réglage en tangage de l'unité d'aile (12) par rapport à la partie de fuselage (18A).

13. Procédé selon l'une quelconque des revendications 11 à 12, ledit réglage de position relative comprenant un réglage en lacet de l'unité d'aile (12) par rapport à la partie de fuselage (18A).

14. Procédé selon l'une quelconque des revendications 11 à 13, ledit réglage de position relative comprenant un réglage en roulis de l'unité d'aile (12) par rapport à la partie de fuselage (18A).

15. Procédé selon l'une quelconque des revendications 11 à 14, ladite fixation de la partie de fuselage (18A) et de l'unité d'aile (12) au niveau de la première interface structurelle comprenant le serrage d'un joint boulonné de la première interface structurelle jusqu'à une valeur qui est inférieure à une valeur de couple finale pour le joint boulonné.
